# EUROPEAN PATENT APPLICATION

(11) **EP 4 645 927 A1**
(43) Date of publication of application: **05.11.2025**
(21) Application number: 24174082.8
(22) Date of filing: 03.05.2024
(51) Int. Cl.: H04W 12/30, H04W 12/48

(54) **FLEXIBLE PROFILE PROVISIONING IN EUICC**

(71) Applicant: Giesecke+Devrient Mobile Security Germany GmbH, 81677 München (DE)
(72) Inventor: Schnellinger, Michael, 81677 München (DE)
(74) Representative: Giesecke+Devrient IP

(57) **Abstract**

A method for installing at least one target profile (P1) to at least one eUICC (10), the eUICC (10) comprising an eUICC hardware identifier (EID), the method comprising steps: 1), 2) at a profile storage (30) connected to or integrated into an OEM production machine (40), located preferably in an IFPP environment, provide a batch comprising at least one Batch Bound Profile Package, BBPP, preferably several Batch Bound Profile Packages, BBPPs, each said BBPP comprising said target profile (P1) to be installed to the eUICC (10);
3), 4) by the OEM production machine (40), for at least one eUICC (10), preferably to a batch of eUICCs corresponding to said batch of profiles, f) download the BBPP comprising the target profile (P1) from the profile storage (30) to the eUICC (10) and g) install the target profile (P1) in the eUICC (10);
**characterized by**
- the eUICC further comprising a Secure Channel Protocol keyset (SCP03-K);
before step 4) to download the target profile (P1):
2*) at a profile storage (30), based on the eUICC hardware identifier (EID), establish a Secure Channel Protocol Session with the eUICC;
in step 4) download the BBPP comprising the target profile (P1) from the profile storage (30) to the eUICC (10) over said Secure Channel Protocol Session.

## Description

### Field of the invention

The present invention relates to profile provisioning in an eUICC.

### Background of the invention and prior art

For eUICCs, several form factors are known, including pUICC or SIM card, embedded UICC eUICC in a narrower sense, and integrated UICC iUICC.

An eUICC is operated in a mobile device, i.e. a device having capability to communicate in a mobile network (wireless network, radio network), and hosts one or several profiles providing to the mobile device connectivity in the mobile network. In an eUICC having Remote SIM Provisioning, RSP, capability, profiles can provisioned remotely, including profile download from a profile server via the mobile device to the eUICC, installation of profiles in the eUICC, deletion of profiles from the eUICC and enabling and disabling of profiles in the eUlCC.

An applet is an application installed or destined or suited to be installed in an eUICC.

Document [1] [SGP.22] GSMA SGP.22 RSP Technical Specification Version 3.0, 19th October 2022, describes architectures and procedures for provisioning (managing) profiles of an eUICC. The profile server from which profiles are downloaded to eUICCs in an SGP.22 scenario is also referred to as SM-DP+. After download and installation of a profile from an SM-DP+ to an eUICC, the eUICC, via the device, sends a profile installation result notification to the SM-DP+, which includes inter alia an ICCID of the installed profile.

Document [1] [SGP.22] distinguishes between provisioning profiles and operational profiles. A provisioning profile, as defined in [1], is "[a] combination of Operator data and applications to be provisioned on an eUICC for the purposes of providing connectivity to a mobile network solely for the purpose of the provisioning of Profiles on the eUlCC." An operational profile, as defined in [1], is "[a] combination of Operator data and applications to be provisioned on an eUICC for the purposes of providing services by the Operator."

According to [1] [SGP.22], section 2.5 "Profile Protection and Delivery", an Operator's Profile is protected within a Profile Package prior to being downloaded to the eUlCC. As further set out in sub-section 2.5.1, "Profile Package Types Overview", from generation to download, a Profile Package will take the following different formats:
- Unprotected Profile Package (UPP): Raw eUICC Profile Package TLV sequence.
- Protected Profile Package (PPP): Segmented and protected in BSP payload TLVs.
- Bound Profile Package (BPP): Prepended with session key agreement info, key replacement package, ISD-P creation and configuration info.
- Segmented Bound Profile Package (SBPP): BPP segmented into STORE DATA APDU script for loading into eUICC. This step is performed by the LPD when the LPD is in the Device.

Document [1] [SGP.22] allows the Protected Profile Package to be encrypted either with a key which is unspecific for any eUICC, or with a key which is specific to an eUICC. The process for transforming the Protected Profile Package PPP into a Bound Profile Package BBP is also referred to as binding. The purpose of the operation of transforming the Protected Profile Package PPP to the Bound Profile Package BPP is to link a Protected Profile Package to a particular eUICC.

According to [1] [SGP.22], section 2.5.4 "Bound Profile Package", the Bound Profile Package (BPP) is generated by the SM-DP+, within the Profile Package Binding function. This is done within a key agreement between the eUICC and the SM-DP+, which is described in the download and installation procedure (section 3.1.3).

According to [1] [SGP.22], section 2.6.4.1 "Key agreement", an Elliptic Curve Key Agreement Algorithm (ECKA) is used for the establishment of a shared secret value. It shall follow the definition for the Anonymous Diffie-Hellman Key Agreement in BSI TR-03111. The algorithm is executed
- by the SM-DP+ using an eUICC one-time public key, otPK.EUICC.KA, and an SM-DP+ one-time private key (sometimes also named "secret" for "private"), otSK.DP.KA, and
- by the eUICC using an SM-DP+ one-time public key, otPK.DP.KA, and an eUICC one-time private key, otSK.EUICC.KA
to calculate the shared secret value.

From the shared secret value, the session keys S-ENC and S-MAC are derived, which in turn are used to encrypt and authenticate the Profile Protection Keys, PPK-ENC and PPK-MAC. With the Profile Protection Key PPK-ENC, the payload of the Protected Profile Package is encrypted (unless, according to a specific option, it is directly encrypted with S-ENC).

After an SM-DP+ has established a Bound Profile Package BBP and downloaded the BBP to an eUICC, the eUICC runs the above described key agreement to derive the shared secret value and finally the Profile Protection Key PPK-ENC (or in the specific option S-ENC), and decrypts the encrypted payload of the Protected Profile Package.

The documents [2] [SGP.41] GSMA SGP.41 eSIM IFPP Architecture and Requirements Version 1.0 Draft 17 and [3] [SGP.42] GSMA SGP.42 eSIM IFPP Technical Specification (unpublished at the date of filing the application) cover In-factory personalization or provisioning, which is a setup in which profiles are provisioned from an OEM production machine to an eUICC locally in a factory environment, contrary to the standard remote provisioning procedures envisaged in [1] [SGP.22], where a profile is downloaded to an eUICC from a remote profile provisioning server. The profile server on which the profiles are kept stored for download to eUICCs in an in-factory procedure is referred to either as also SM-DP+ or as SM-DPf. In the IFPP setup, profiles are first sent from the profile server SM-DP+ or SM-DPf to the OEM production machine. Later, the profiles are downloaded from the OEM production machine to an eUlCC.

In IFPP, typically a batch of several profiles, typically a thousand or several thousand profiles, is provided from the profile server SM-DP+ or SM-DPf to the production machine at a time, which are all encrypted with the same key, instead of with profile-individual keys.

For providing the batch of profiles, each profile package for providing a profile is embodied as a Batch Bound Profile Package. Herein, the Batch Bound Profile Package is encrypted with a batch profile protection key which is derived from a batch eUICC PKI key pair which is identical for all eUICCs of the batch, particularly derived according to a [1] [SGP.22] key agreement mechanism for generating a Bound Profile Package, with the batch eUICC one-time key pair used as the eUICC one-time key of [1] [SGP.22].

Since all Batch Bound profile packages BBPPs of the batch are encrypted with the same encryption key, a binding of a BBPP to a distinct eUICC is not yet achieved, and a BBPP can be downloaded to any eUICC.

Binding of a specific profile to an eUICC can be delayed to a later point in time or procedural flow.

The encryption of all BBPPs with the same key bears a risk that a BBPP is downloaded to the wrong eUICC, or to more than one eUICC, which is in contradiction to the destination of one profile to only one single eUICC.

Document [5] [GP SCP03] GPC_2.3_D_SCP03_v1.1.2, GlobalPlatform Technology Secure Channel Protocol '03', Card Specification v2.3 - Amendment D, Version 1.1.2, March 2019, from the prior art describes the Secure Channel Protocol (SCP) SCP03. According to [5] [GP SCP03], a SCP session is initiated by two subsequently processed SCP03 commands INITIALIZE UPDATE and EXTERNAL AUTHENTICATE. Other Secure Channel Protocols make use of a similar session initialization procedure with similar commands.

### Objective of the invention

It is an object of the present invention to provide an eUICC and method for profile provisioning to an eUICC which contribute to flexible and at the same time reliable installation and/or enablement of profiles to eUICCs, which maintains the possibility to late binding of profiles to eUICCs, especially in in-factory profile management, and which may preferably contribute to preventing the cloning of profiles.

### Summary of the invention

The object of the invention is achieved by an eUICC with following features, according to claim 1. Embodiments of the invention are presented in dependent claims.

In greater detail, the object is achieved by a method for installing at least one target profile to at least one eUICC, the eUICC comprising an eUICC hardware identifier.

The method comprises following steps.
1), 2) at a profile storage connected to or integrated into an OEM production machine, provide a batch comprising at least one Batch Bound Profile Package, BBPP, or preferably several Batch Bound Profile Packages, BBPPs, each said BBPP comprising said target profile (P1) to be installed to the eUICC;
3), 4) by the OEM production machine, for at least one eUICC, or to a batch of eUICCs corresponding to said batch of profiles, f) download the BBPP comprising the target profile from the profile storage to the eUICC and g) install the target profile in the eUlCC.

The method is characterized by the eUICC further comprising a Secure Channel Protocol keyset; and by, before step 4) to download the target profile, further executing:
2*) based on the eUICC hardware identifier (EID), establish a Secure Channel Protocol Session between the profile storage (30) and the eUICC;
in step 4) download the BBPP comprising the target profile from the profile storage to the eUICC over said Secure Channel Protocol Session.

In that the Secure Channel Protocol Session between the profile storage and one particular eUICC is established based on that particular eUICC's hardware identifier, EID, the particular eUICC is made a selected target eUICC, which has been selected for downloading the target profile to the target eUICC, and a binding between the formerly neutral profile or BBPP and the selected target eUICC is established.

Thus, installing the target profile in an eUICC, after it has been downloaded thereto, can be effected only to the selected target eUICC, preventing installing the same target profile to a different eUICC.

The Secure Channel Protocol Session provides a reliable communication channel for the profile download.

In that the binding of the target profile to the target eUICC is established only as late as upon establishment of the Secure Channel Protocol Session, late binding of the target profile to the target eUICC is maintained.

Accordingly, the present invention provides a method for profile provisioning to an eUICC which contribute to flexible and at the same time reliable installation and/or enablement of profiles to eUICCs, which maintains the possibility to late binding of profiles to eUICCs,
The invention has following further advantages.
- The invention allows an offline concept of collecting a batch (larger number) of profiles in a cryptographically secured profile storage (e.g. a Hardware Security Module HSM) for later download, herein at the same time realizing by a BBPP approach, wherein each profile is provided in form of a Batch Bound Profile Package which is not yet bound to a particular eUICC, however each profile is still available for download to any eUICC of the batch.
- Once, a decision is made to which particular eUICC a particular profile shall be loaded, the secure connection between the profile storage and the respective particular eUICC is established by an individual SCP03 session, as follows:
   - eUICC: a Secure Channel Protocol keyset (e.g. SCP01,2, or 3 etc. keyset) is already pre-personalized into the eUICC, by a pre-personalization procedure which was done in advance at a profile provider's Data Generation instance;
   - Profile Storage: a Secure Channel Protocol keyset (e.g. SCP01,2, or 3 etc. keyset) is derived based on the EID and a secure MasterKey inside the Profile Storage, e.g. HSM. For each eUICC, due to the eUICC specific EID, a different eUICC specific Secure Channel Protocol keyset is derived. The profile is encrypted with a derived Secure Channel key. Hence, a different encrypted profile is generated for each different eUICC.
- The Secure Channel encryption, e.g. SCP01, 2, 3 etc. encryption, results in different Profiles at eUICC side for different eUICC. Occurrence of identical EIDs for different eUICCs is an indicator that one of the eUICCs is a clone. This feature makes the solution accepted by GSMA SAS certification, which does not allow BBPP-clones to be personalized.
- Profiles are ready to be used directly after download, and no waiting for connectivity to receive an enablement command for a profile installed and kept disabled, or other deferred binding mechanisms, is required.
- The cryptographically secured profile storage, e.g. HSM or Edgebox, takes a role of a trusted "Binding-Controller".

According to some embodiments, the profile storage provides of a MasterKey specific to the batch, and step 2*) is executed as: based on the eUICC hardware identifier and the MasterKey provided at the profile storage, establish a Secure Channel Protocol Session between the profile storage and the eUICC.

According to some embodiments, the step 2*) to establish the Secure Channel Protocol Session comprises following steps:
a) read out from the eUICC to the profile storage, (or from each eUICC of the batch), said eUICC hardware identifier;
b) send a first Secure Channel Protocol session initiation command, particularly an SCP03 other Secure Channel Protocol, SCP, INITIALIZE UDPATE command, from the profile storage to the eUICC (or each eUICC of the batch); and send back from the eUICC, (or each eUICC), to the profile storage a cryptogram calculated by the eUICC, in reaction to receiving the first SC session initiation command, particularly SCPxx (e.g. SCP03, SCP01, SCP02, SCP10, SCP11) command, particularly INITIALIZE UPDATE;
c) at the profile storage, derive, from a MasterKey specific for the batch and the read out eUICC hardware identifier, said Secure Channel Protocol key set;
d) from the profile storage to the eUICC, or each eUICC, send a second Secure Channel Protocol session initiation command, particularly an SCP03 or other Secure Channel Protocol, SCP, EXTERNAL AUTHENTICATE command; and at the eUICC, or each eUICC, accept the received second SC session initiation command, particularly SCPxx (e.g. SCP03, SCP01, SCP02, SCP10, SCP11) EXTERNAL AUTHENTICATE command, and hereby establish the Secure Channel Protocol Session.

According to embodiments of the invention, the Secure Channel Protocol is either one of: - SCP03; - SCP01; - SCP02; - SCP10; - SCP11, or a future other SCP, possibly with other commands than INITIALIZE UPDATE and EXTERNAL AUTHENTICATE, which have similar functionality.

According to some embodiments, step 3), 4) download the target profile P1 to the eUICC 10, or each eUICC, comprises steps, before f) download and g) installation:
e) from the profile storage to the eUICC 10, or each eUICC, send a request to accept IFPP download, and by the eUICC, or each eUICC, accept the request; and after the acceptance;
f) download the BBPP comprising the target profile from the profile storage to the eUICC and g) install the target profile in the eUICC.

According to some embodiments, the target profile is comprised in the Batch Bound Profile Package, BBPP, in form of an APDU script, which when executed effects installation of the target profile. In this case, the method further comprises in step 4) executing the APDU script comprised in the downloaded BBPP to install the target profile.

The method, according to some embodiments, further comprises, after the installing step g), an enablement step: enable the installed target profile P1.

According to some embodiments, the method further comprises steps of sending a profile installation result notification from the eUICC to the background system, with steps:
5) by the OEM production machine, receive, from the eUICC, or from each eUICC of, a profile installation result notification of the target profile, said profile installation result notification comprising a profile identifier, such as ICCID, of the target profile and at least one hardware identifier, said at least one hardware identifier comprising a hardware identifier of the eUICC, or/and a hardware identifier of a device hosting the eUICC;
6), 7), 8) by the OEM production machine, send the profile installation result notification, received from the eUICC, or each eUICC, to
one the following entities:
- a profile server;
- a Batch Bound Profile Package Aggregator, BBPPA, connected to a profile server, and optionally further to the profile server;
- a Batch Bound Profile Package Aggregator, BBPPA, integrated into the profile server.

According to some embodiments, the batch is sent to the profile storage from one the following entities:
- a profile server, such as SM-DP+ or SM-DPf;
- a Batch Bound Profile Package Aggregator, BBPPA, connected to a profile server, after having been received at the Batch Bound Profile Package Aggregator, BBPPA, from a profile server, such as SM-DP+ or SM-DPf;
- a Batch Bound Profile Package Aggregator, BBPPA, integrated into the profile server.

According to some embodiments, the method further comprises:
Upon step 2*), at a profile storage, verify that the eUICC hardware identifier is unique,
and:
- only in case the eUICC hardware identifier is unique, based on the eUICC hardware identifier, establish the Secure Channel Protocol Session with the eUICC;
- in case the eUICC hardware identifier is identified as identical to a eUICC hardware identifier of a different eUICC, prevent or omit establishing the Secure Channel Protocol Session with the eUICC.

According to some embodiments, the OEM production machine is located in an IFPP environment.

The invention further provides an eUICC comprising a Secure Channel Protocol keyset, as set out above.

The invention further provides a computer readable medium comprising code which when executed performs a method according to the invention.

The invention further provides a profile storage, comprising a Masterkey specific to a batch of eUICCs, each eUICC comprising a Secure Channel Protocol keyset, the profile storage being constructed to read out from each eUICC of the batch a eUICC hardware identifier of the eUICC and to establish with the respective eUICC a Secure Channel Protocol Session based on the read out eUICC hardware identifier, particularly EID.

The invention further provides an OEM production machine comprising a profile storage integrated into or connected to the OEM production machine, the OEM production machine being constructed to initiate a procedure:
2*) at the profile storage, based on the eUICC hardware identifier, and optionally also based on the Masterkey at the profile server, establish a Secure Channel Protocol Session with the eUICC;
4) download a Batch Bound Profile Package, BBPP, comprising a target profile (P1), from the profile storage to the eUICC over said Secure Channel Protocol Session.

In the following, examples for methods to establish a Secure Channel Protocol Session between a profile storage and an eUICC will be given.

The eUICC comprises an EID and a Secure Channel Protocol keyset. The profile storage comprises a MasterKey which is valid for the eUICC and further eUICCs building a batch of eUICCs. The profile storage derives the Secure Channel Protocol keyset from the MasterKey and the eUICC's EID.

According to some embodiments, deriving the Secure Channel Protocol keyset by the profile storage comprises that, or is done in that, the EID is encrypted with the Master Key.

According to some embodiments, deriving the Secure Channel Protocol keyset by the profile storage comprises that, or is done in that, the EID, and as or if required key diversification data, are encrypted with the MasterKey.

According to some embodiments, different keys of the same Secure Channel Protocol keyset are derived, in that the EID and different key diversification data are encrypted with the MasterKey.

According to some embodiments, the key diversification data may be embodied as, or may comprise, a modification of a defined section of the EID.

According to some embodiments, the key diversification data may be embodied as, or may comprise, a selection of a SCP key as part of a value having a higher length than the length of the SCP03 key.

According to some embodiments, a first and a second keys S-ENC and S-MAC of said Secure Channel Protocol keyset are derived in that the EID combined with first key diversification data is encrypted with the MasterKey to derive S-ENC, and the EID combined with second key diversification data is encrypted with the MasterKey to derive S-MAC.

According to some embodiments, in addition to the first and second keys, S-ENC and S-MAC as above, a third key S-DEK of said Secure Channel Protocol keyset is derived in that the EID combined with third key diversification data is encrypted with the MasterKey to derive S-DEK.

According to some embodiments, the first, second and optionally third keys, S-ENC, S-MAC and S-DEK are derived by encryption with the Advanced Encryption Standard, AES, algorithm.

Alternatively to AES, Data Encryption Standard, DES, or triple DES may be employed.

According to a first exemplary variant, the Secure Channel protocol keyset is an Advanced Encryption Standard keyset, AES keyset, comprising at least an encryption key S-ENC, an authentication key S-MAC, and optionally a data encryption key S-DEK.

According to a second exemplary variant, derivation of a Secure Channel Protocol keyset by the profile storage is done by a HKDF Key-Expansion Mechanism according to [4] RFC5869. The HKDF (HMAC-based Extract-and-Expand Key Derivation Function) algorithm is described in RFC 5869. HMAC-SHA256 is used as the hash function. An output keying material (OKM) of 64 byte (L=64) is generated and the first 16 byte (128 bit) are used as the S_ENC, (delete?), the next 16 byte (128 bit) are used asS_MAC, (delete?), and, if desired, last 16 byte (128 bit) are used asS-DEK .

### Brief description of the drawings

Embodiments of the invention will now be described with reference to the accompanying drawings, throughout which like parts are referred to by like references, and in which represents:

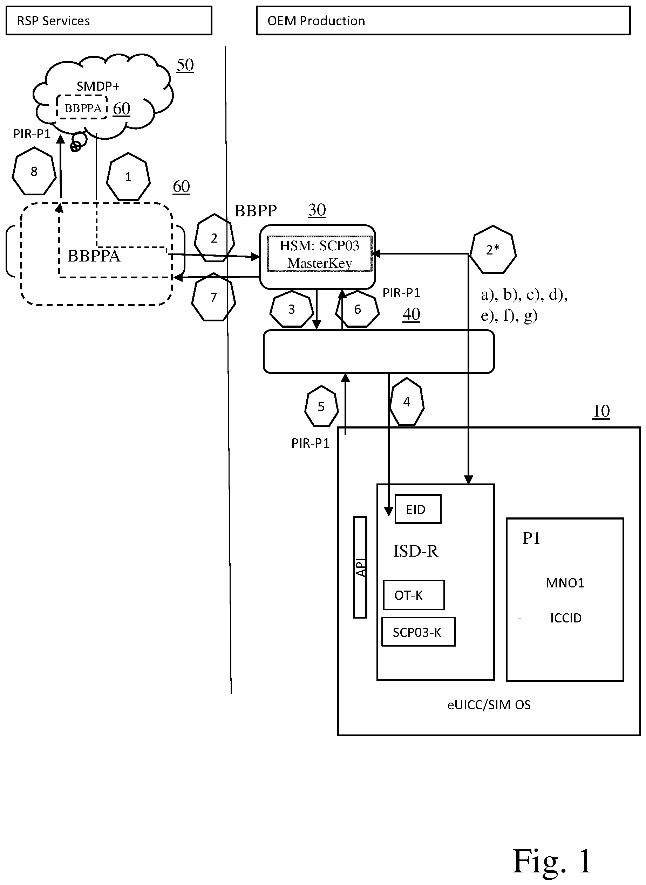

- Fig. 1: an architecture and method for installing at least one target profile P1, or a batch of such profiles, to an eUICC, according to an embodiment of the invention.

### Detailed description of the invention

Fig. 1 describes an architecture and method for installing at least one target profile P1, or a batch of such profiles, to an eUICC 10, according to an embodiment of the invention.

The architecture used for the installing according to Fig. 1 comprises following elements.

The architecture comprises an eUICC 10. The eUICC 10 comprises in Issuer Security Domain Root, ISD-R, in or under the regency of which the eUICC's EID and OTA-keys are stored. After the downloading and installing of a profile P1, the eUICC 10 will in addition comprise a profile container containing an operational profile P1 of a mobile network operator MNO1. The profile data of the profile P1 also comprise a profile identifier such as ICCID. According to the present invention, the Issuer Security Domain Root, ISD-R, further comprises a Secure Channel Protocol keyset, according to Fig. 1 exemplarily an SCO-03 keyset, SCP03-K. The architecture comprises, after a profile has been selected for download, a target profile P1 to be downloaded to the eUICC 10.

The architecture comprises a profile storage 30, which may particularly be provided with an included HSM. The architecture comprises an OEM production machine 40. The profile storage 30 is connected to or integrated into an OEM production machine 40. The architecture comprises a profile server 50, which may particularly be an DM-DP+ or SM-DPf profile server, and which may be connected or connectable to a profile provider's data generation instance. The architecture comprises a Batch Bound Profile Package Aggregator 60, BBPPA, which may be either connected between the (HSM-secured) profile storage 30 and the profile server 50, or integrated into the profile server 50, e.g. integrated into the SM-DP+ or SM-DPf profile server.

A profile installation method in the architecture of Fig. 1, according to an embodiment of the invention, comprises following steps.

In steps 1), 2) a batch of profiles is transmitted (sent) from the Batch Bound Profile Package Aggregator 60 to the HSM-secured profile storage.

In case the Batch Bound Profile Package Aggregator 60 is integrated into the profile server 30 (e.g. SM-DP+ or SM-DPf), the transmission of the batch of profiles is directly from the profile server (SM-DP+, SM-DPf) 50 to the HSM-secured profile storage 30.

In case the Batch Bound Profile Package Aggregator 60 is a separate instance, the batch of profiles is transmitted first 1) from the profile server 50 to the Batch Bound Profile Package Aggregator 60, and then 2) further from the Batch Bound Profile Package Aggregator 60 to the HSM-secured profile storage 30.

The batch comprises at least one Batch Bound Profile Package, BBPP, or preferably several Batch Bound Profile Packages, BBPPs, typically an amount of one thousand or several thousand Batch Bound Profile Packages, BBPPs.

Before a profile from the batch is downloaded and installed to the eUICC 10, a selection is made which profile to download, and a selection is made to which eUICC 10. By this selection, the selected profile is made the target profile P1 to be downloaded and installed to the eUICC 10, and the selected eUICC 10 is made a target eUICC 10. In a step 2*), at the profile storage 30, based on the selected eUICC hardware identifier EID, a Secure Channel Protocol Session with the eUICC 10 is established.

In steps 3), 4) the BBPP comprising the target profile P1 is f) downloaded by the OEM production machine 40 from the profile storage 30 to the eUICC 10 over said established Secure Channel Protocol Session. The downloaded BBPP comprising the target profile P1 is unpacked in the eUICC 10, and g) the target profile P1 is installed in the eUICC 10.

The described procedure is preferably executed for all eUICCs and all profiles of a batch, until each eUICC is provided with a profile from the batch, and each profile of the batch are loaded and installed to an eUICC.

In greater detail, establishment of the Secure Channel Protocol Session comprises following steps, which will be detailed on the example of an SCP03 session, however alternatively also can be an SCP01, SCP02 or other Secure Channel Protocol Session.

In a step a), the eUICC hardware identifier EID of the selected eUICC 10 is read out from the selected eUICC 10 to the profile storage 30.

In a step b), the profile storage 30 sends to the eUICC 10 from which the EID was received an SCP03 command INITIALIZE UDPATE, and the eUICC 10 calculates a cryptogram according to the SCP03 protocol and sends the calculated cryptogram back to the profile storage 30, in reaction to receiving the SCP03 command INITIALIZE UPDATE.

In a step c) at the profile storage (30), a Secure Channel Protocol keyset, SCP03-K, is derived in which an encryption key ENC and an authentication code MAC are comprised. The Secure Channel Protocol keyset, SCP03-K, including the encryption key ENC and an authentication code MAC, is herein derived from a MasterKey specific for the batch and the read out eUICC hardware identifier EID; accordingly, since the encryption key ENC and authentication code are derived based on the eUICC's EID, ENC and MAC are specific to the eUICC 10.

In a step d), the profile storage 30 sends to the eUICC 10 an SCP03 command EXTERNAL AUTHENTICATE, herein using the MAC calculated based on the eUICC 10 specific EID; and the eUICC 10 accepts the received EXTERNAL AUTHENTICATE; hereby the Secure Channel Session is established.

Subsequently, the BBPP containing the target profile P1 is encrypted with the EID dependent encryption key ENC, and is downloaded to the eUICC 10.

Instead of SCP03 commands INITIALIZE UDPATE and EXTERNAL AUTHENTICATE, two other suitable SCP03 commands may be employed.

The target profile P1 is comprised in the downloaded Batch Bound Profile Package, BBPP, in form of an APDU script, which when executed effects installation of the target profile. The BBPP comprising the target profile (P1) is downloaded from the profile storage (30) to the eUICC (10) in that an APDU script is downloaded to the eUICC, and an installed status of the target profile (P1) is established in that the APDU script is executed.

Subsequently, the installed profile P1 is enabled.

After the profile P1 has been installed in the eUICC 10 and enabled, the background system is provided with installation result notifications.

In a step 5), the eUICC 10 sends, and the OEM production machine 40, receives from the eUICC 10 a profile installation result notification PIR-P1 of the target profile P1.

The profile installation result notification PIR-P1 comprises a profile identifier ID of the target profile P1 and at least one hardware identifier, which may be EID or a device ID, or both EID and device ID, preferably at least EID of the eUICC 10.

In steps 6), 7), 8), the OEM production machine 40 sends the profile installation result notification PIR-P1, which was received from the eUICC 10, to the profile server 50, e.g. SM-DP+ or SM-DPf.

In case the OEM production machine 40 is connected to the profile storage 30, in a step 6) the OEM production machine 40 forwards the profile installation result notification PIR-P1 through or to the profile storage 30.

The profile installation result notification PIR-P1 may be handled by a Batch Bound Profile Package Aggregator, BBPPA, 60 integrated into the profile server 50 (e.g. SM-DP+ or SM-DPf) . In case of a separate BBPPA 60, the profile installation result notification PIR-P1 may be sent from the OEM production machine 40 to the BBPPA 60 (step 7), and from the BBPPA 60 further to the profile server 50 (step 8).

In the following, detailed examples will be described, of methods to derive a SCP03 Secure Channel Protocol keyset by a profile storage 30, so as to establish a Secure Channel with a target eUICC 10, which is part of a batch of eUICCs similar to said target eUICC 10.

A prerequisite for the methods is that the eUICC comprises an EID and an SCP03 Secure Channel Protocol keyset. Another prerequisite is that the profile storage 30 comprises a MasterKey, Kscp03master, valid for the batch of eUICCs, including the target eUICC 10.

For the following examples the MasterKey, Kscp03master, is assumed to be a random 32 bit AES256 key, and to have an exemplary value '00 11 22 33 44 55 66 77 88 99 AA BB CC DD EE FF 00 11 22 33 44 55 66 77 88 99 AA BB CC DD EE FF ' .

### Variant 1: Use AES-Encryption (Advanced Encryption Standard):

In the following, a detailed first exemplary variant will be described, wherein a Secure Channel protocol keyset derived by a profile storage 30 is an Advanced Encryption Standard keyset, AES keyset, comprising an encryption key S-ENC, an authentication key S-MAC. In case of special security requirements, a third key S-DEK may be derived, however S-DEK is an optional key.

The target eUICC comprises an exemplary 16-byte long EID having an exemplary value = ,89000000000000000000000000000000'.

The SCP03 key derivation is performed as follows.
a) S-ENC: set EID last checksum-byte to ,01': first key diversification are added to the EID in that the last byte of the EID, which is a checksum-byte, is set to a value '01'.
   S_ENC_IFPP[16]: AES256 encrypt of data (CBC-Mode, ISO/IEC 9797-1 padding method 1): The EID and the first key diversification data, i.e. the value ,89000000000000000000000000000001', is encrypted with the MasterKey, i.e. with the Key of value = ,00 11 22 33....', to provide a first encryption result having a value = 70 25 3804 1F C8 33 40 ED 20 87 A2 D1 3C A1 A9.
b) S-MAC: set EID last checksum-byte to ,02': second key diversification are added to the EID in that the last byte of the EID, which is a checksum-byte, is set to a value '02'.

S_MAC_IFPP[16]: AES256 encrypt of data: The EID and the second key diversification data, i.e. the value ,89000000000000000000000000000002', is encrypted with the MasterKey, i.e. with the Key of value = ,00 11 22 33....', to provide a second encryption result having a value = 83 4B BD 2B 2B EC 9E 9D F9 D2 9D 34 DD A1 61 5D. c) S-DEK: set EID last checksum-byte to ,03': third key diversification are added to the EID in that the last byte of the EID, which is a checksum-byte, is set to a value '03'.

S_DEK_IFPP[16]: AES256 encrypt of data: The EID and the third key diversification data, i.e. the value = ,89000000000000000000000000000003', is encrypted with the MasterKey, i.e. with the Key of value = ,00 11 22 33....', to provide a second encryption result having a value = 2A 73 FF 2D F2 F5 2740 F8 82 61 10 0E 7A D2 1E.

Obviously, each key derivation executed with a different EID provides different EID-specific SCP03 keys S-ENC, S-MAC and S-DEK, and all three SCP03 keys S-ENC, S-MAC and S-DEK derived with the same EID are bound to the same EID, and thus to the same eUICC.

### Variant 2: Use HKDF Key-Expansion, according to RFC5869:

In the following, a detailed second exemplary variant will be described, wherein a Secure Channel protocol keyset derived by a profile storage 30 is derived by HKDF Key-Expansion, according to RFC5869.

The HMAC-based Extract-and-Expand Key Derivation Function, HKDF, algorithm is described in RFC 5869. Herein, HMAC stands for Hash-based Message Authentication Code, i.e. a MAC based on a hash function.

In the described example, HMAC-SHA256 is used as the hash function. An output keying material, OKM, of 64 byte (L=64) is generated and the first 16 byte (128 bit) are used as the encryption key S-ENC (functionally corresponding to the AES S-ENC), the next 16 byte (128 bit) are used as S_MAC (functionally corresponding to the AES S-MAC) and the last 16 byte (128 bit) are used as S_DEK (functionally corresponding to the AES S-DEK).

Following calculations are performed.

The standard HKDF Key-Expansion, according to RFC5869 comprises following steps:
Step1: PRK = HKDF-Extract(salt, IKM)
Step2: OKM = HKDF-Expand(PRK, info, L)

According to the second, HKDF, variant of the embodiment of the present invention, the steps to derivate PRK and OKM are varied and executed as follows:
Step1: PRK = HMAC-SHA256("00 ... 00", Kscp03master)
Step2: OKM = SCP03-Keyset = HMAC-SHA256(PRK, EID)

In Step 1 of deriving the PRK, the SCP03 MasterKey contained in the profile storage 30 is used. In Step 2 of deriving the OKM from the PRK which was derived in Step 1 and from further data, the EID of the target eUICC 10 is used as further data. The output key material, OKM, is thus derived based on both the MasterKey (contained in the PRK) and the EID of the eUICC 10.

In the HKDF variant, the position of 16 bytes in the 64 byte OKM is used as the key diversification data to derive two or three different keys from one single 64 byte OKM, i.e. the first 16 byte of OKM are taken as S-ENC, the second 16 byte of OKM are taken as S-MAC, and optionally the third 16 byte of OKM are taken as S-DEK.

From the 64 byte OKM result, the S-ENC, S-MAC, S-DEK keys are taken:
S-ENC => byte 1-16 of result;
S-MAC => byte 17-32 of result;
S-DEK => byte 33-48 of result.

### Reference numerals

- 10: eUICC
- 30: profile storage, particularly with included HSM
- 40: OEM production machine
- 50: profile server, particularly DM-DP+ or SM-DPf
- 60: Batch Bound Profile Package Aggregator, BBPPA
- P1: target profile

PIR-P1 profile installation result notification for target profile P1

### Cited documents

[1] [SGP.22] GSMA SGP.22 RSP Technical Specification Version 3.0, 19th October 2022
[2] [SGP.41] GSMA SGP.41 eSIM IFPP Architecture and Requirements Version 1.0 Draft 17
[3] [SGP.42] GSMA SGP.42 eSIM IFPP Technical Specification (to be finalized and unpublished at the date of filing the application)
[4] RFC5869
[5] [GP SCP03] GPC_2.3_D_SCP03_v1.1.2, GlobalPlatform Technology Secure Channel Protocol '03', Card Specification v2.3 - Amendment D, Version 1.1.2, March 2019

## Claims

1. A method for installing at least one target profile (P1) to at least one eUICC (10), the eUICC (10) comprising an eUICC hardware identifier (EID), the method comprising steps:
1), 2) at a profile storage (30) connected to or integrated into an OEM production machine (40), provide a batch comprising at least one Batch Bound Profile Package, BBPP, or several Batch Bound Profile Packages, BBPPs, each said BBPP comprising said target profile (P1) to be installed to the eUICC (10);
3), 4) by the OEM production machine (40), for at least one eUICC (10), or to a batch of eUICCs corresponding to said batch of profiles, f) download the BBPP comprising the target profile (P1) from the profile storage (30) to the eUICC (10) and g) install the target profile (P1) in the eUICC (10);
**characterized by**
- the eUICC and further comprising a Secure Channel Protocol keyset (SCP03-K);
before step 4) to download the target profile (P1):
2*) based on the eUICC hardware identifier (EID), establish a Secure Channel Protocol Session between the profile storage (30) and the eUICC;
in step 4) download the BBPP comprising the target profile (P1) from the profile storage (edge bo30x) to the eUICC (10) over said Secure Channel Protocol Session.

2. The method according to claim 1, wherein the profile storage (30) provides of a MasterKey specific to the batch, and step 2*) is executed as: based on the eUICC hardware identifier (EID) and the MasterKey provided at the profile storage (30), establish a Secure Channel Protocol Session between the profile storage (30) and the eUICC (10).

3. The method according to claim 1 or 2, wherein the step 2*) to establish the Secure Channel Protocol Session comprises following steps:
a) read out to the profile storage (30), from the eUICC (10), or from each eUICC of the batch, said eUICC hardware identifier (EID);
b) from the profile storage (30) to the eUICC (10) or each eUICC, send a first Secure Channel Protocol session initiation command, particularly an SCP03 other Secure Channel Protocol, SCP, INITIALIZE UDPATE command; and send back from the eUICC (10), or each eUICC, to the profile storage (30) a cryptogram calculated by the eUICC (10), or each eUICC, in reaction to receiving the SCP03 command, particularly INITIALIZE UPDATE command;
c) at the profile storage (30), derive, from a MasterKey specific for the batch and the read out eUICC hardware identifier (EID), said Secure Channel Protocol key set (SCP03-K; ENC, MAC, DEK);
d) from the profile storage (30) to the eUICC (10), or each eUICC, send a second Secure Channel Protocol session initiation command, particularly an SCP03 or other Secure Channel Protocol, SCP, EXTERNAL AUTHENTICATE command; and at the eUICC (10), or each eUICC, accept the received command, particularly EXTERNAL AUTHENTICATE command, and hereby establish the Secure Channel Protocol Session.

4. The method according to any of claims 1 to 3, wherein the Secure Channel Protocol is either one of:
- SCP03;
- SCP01;
- SCP02;
- SCP10;
- SCP11.

5. The method according to any of claims 1 to 4, wherein step 3), 4) download the target profile (P1) to the eUICC (10), or each eUICC, comprises steps, before f) download and g) installation:
e) from the profile storage (30) to the eUICC (10), or each eUICC, send a request to accept IFPP download, and by the eUICC (10), or each eUICC, accept the request; and after the acceptance;
f) download the BBPP comprising the target profile (P1) from the profile storage (30) to the eUICC (10) and g) install the target profile (P1) in the eUICC (10).

6. The method according to any of claims 1 to 5, wherein
- the target profile (P1) is comprised in the Batch Bound Profile Package, BBPP, in form of an APDU script, which when executed effects installation of the target profile;
- the method further comprises in step 4) executing the APDU script comprised in the downloaded BBPP to install the target profile P1.

7. The method according to any of claims 1 to 6, further comprising, after step g) install the target profile (P1) in the eUICC (10), the step: enable the installed target profile (P1).

8. The method according to any of claims 1 to 7, further comprising steps:
5) by the OEM production machine (40), receive, from the eUICC (10), or from each eUICC of, a profile installation result notification (PIR-P1) of the target profile (P1), said profile installation result notification (PIR-P1) comprising a profile identifier (ID) of the target profile (P1) and at least one hardware identifier (EID; device ID), said at least one hardware identifier comprising a hardware identifier (EID) of the eUICC (10), or/and a hardware identifier (device ID) of a device hosting the eUICC (10);
6), 7), 8) by the OEM production machine (40), send the profile installation result notification (PIR-P1), received from the eUICC (10), or each eUICC, to
one the following entities:
- a profile server (50);
- a Batch Bound Profile Package Aggregator, BBPPA, (60) connected to a profile server (50), and optionally further to the profile server (50);
- a Batch Bound Profile Package Aggregator, BBPPA, (60) integrated into the profile server (50).

9. The method according to any of claims 1 to 8, further comprising at steps 1), 2), to provide the batch at the profile storage (30), send the batch to the profile storage (30) from one the following entities:
- a profile server (50);
- a Batch Bound Profile Package Aggregator, BBPPA, (60) connected to a profile server (50), after having been received at the Batch Bound Profile Package Aggregator, BBPPA, (60) from a profile server (50);
- a Batch Bound Profile Package Aggregator, BBPPA, (60) integrated into the profile server (50).

10. The method according to any of claims 1 to 9, further comprising
Upon step 2*), at a profile storage (30), verify that the eUICC hardware identifier (EID) is unique, and:
- only in case the eUICC hardware identifier (EID) is unique, based on the eUICC hardware identifier (EID), establish the Secure Channel Protocol Session with the eUICC;
- in case the eUICC hardware identifier (EID) is identified as identical to a eUICC hardware identifier (EID) of a different eUICC, prevent or omit establishing the Secure Channel Protocol Session with the eUlCC.

11. The method according to any of claims 1 to 10, wherein the OEM production machine (40) is located in an IFPP environment.

12. A computer implemented medium comprising code which when executed performs a method according to any of claims 1 to 11.

13. A profile storage (30), comprising a Masterkey specific to a batch of eUICCs (10), each eUICC (10) comprising a Secure Channel Protocol keyset (SCP03-K), the profile storage (30) being constructed to read out from each eUICC (10) of the batch a eUICC hardware identifier (EID) of the eUICC (10) and to establish with the respective eUICC (10) a Secure Channel Protocol Session based on the read out eUICC hardware identifier (EID).

14. An OEM production machine (40) comprising a profile storage (30) according to claim 13 integrated into or connected to the OEM production machine (40), the OEM production machine (40) being constructed to initiate a procedure:
2*) at the profile storage (30), based on the eUICC hardware identifier (EID), establish a Secure Channel Protocol Session with the eUICC;
4) download a Batch Bound Profile Package, BBPP, comprising a target profile (P1), from the profile storage (30) to the eUICC (10) over said Secure Channel Protocol Session.

15. An eUICC, **characterized by** the eUICC comprising
- a Secure Channel Protocol keyset (SCP03-K);
- an interfacing means constructed to manage communication between the eUICC (10) and a profile storage (30), according to a method according to any of claims 1 to 12.
